(19) Europäisches Patentamt

European Patent Office

Office européen des brevets

(11) **EP 0 903 565 B1**

(12) **FASCICULE DE BREVET EUROPEEN**

(45) Date de publication et mention
de la délivrance du brevet:
**02.06.2004 Bulletin 2004/23**

(51) Int Cl.⁷: **G01J 3/26**

(21) Numéro de dépôt: **98402302.8**

(22) Date de dépôt: **17.09.1998**

(54) **Interféromètre fabry-pérot accordable intégré**

Integriertes abstimmbares Fabry-Pérot-Interferometer

Integrated tunable Fabry-Pérot interferometer

(84) Etats contractants désignés:
**DE GB IT**

(30) Priorité: **19.09.1997 FR 9711696**

(43) Date de publication de la demande:
**24.03.1999 Bulletin 1999/12**

(73) Titulaire: **COMMISSARIAT A L'ENERGIE
ATOMIQUE
75015 Paris (FR)**

(72) Inventeurs:
• **Jourdain, Anne
38360 Sassenage (FR)**
• **Bieth, Claude
38640 Claix (FR)**

(74) Mandataire: **Audier, Philippe André et al
Brevalex,
3, rue du Docteur Lancereaux
75008 Paris (FR)**

(56) Documents cités:
**EP-A- 0 219 359          EP-A- 0 668 490**

**Description**

Domaine technique et art antérieur

L'invention concerne le domaine de l'interférométrie, et plus particulièrement la réalisation d'un interféromètre Fabry-Pérot, commandable électrostatiquement et accordable. Un tel dispositif est par exemple utilisé comme filtre interférométrique.

Les documents EP-668 490 et EP 693 683 décrivent des interféromètres Fabry-Pérot intégrés, à commande électrostatique.

On trouve également la description de tels interféromètres dans l'article de M. Blomberg et al., intitulé "Electrically Tunable Micromachined Fabry-Pérot Interferometer in Gas Analysis" paru dans Physica Scripta, vol. T69, pages 119-121, 1997 et dans l'article de M. Viitasalo et al., intitulé "Carbon Dioxide Sensor based on Micromachined Fabry-Pérot Interferometer" paru dans SENSOR 97, Poster A7.36, pages 193-198.

Dans ces documents, une cavité optique résonante est usinée dans un substrat de silicium. Cette cavité est une couche d'air d'épaisseur $\lambda/2$, $\lambda$ étant la longueur d'onde de travail, qui est usinée entre deux miroirs diélectriques parallèles. L'un des miroirs est mobile, tandis que l'autre reste fixe. Chacun de ces miroirs porte des électrodes de commande, qui peuvent être réalisées sous la forme de dépôts conducteurs de couches de silicium fortement dopé. L'application d'une différence de potentiel entre ces électrodes de commande attire le miroir mobile vers le miroir fixe, modifiant ainsi l'épaisseur d'air, et donc la longueur d'onde de résonance.

Dans le document EP-668 490, l'électrode du miroir mobile est annulaire et le fait d'usiner une zone amincie sur le pourtour du miroir en rend le centre plus rigide, et améliore le déplacement plan de la zone optique utile centrale.

Les dispositifs décrits dans ces divers documents mettent en oeuvre des électrodes de commande portées par les deux miroirs parallèles. La commande électrostatique se fait directement par l'application d'une tension sur ces électrodes. Cette technique oblige à prendre des contacts électriques sur deux faces conductrices en regard, d'où une certaine complexité du dispositif résultant, et du procédé permettant de le réaliser. En particulier, la prise de contact sur le miroir supérieur est délicate, et nécessite un empilement local de couches fortement dopées. Une très grande attention doit donc être portée sur l'isolation des différentes parties actives, afin d'éviter tout court-circuit.

Exposé de l'invention

La présente invention a pour objet un interféromètre Fabry-Pérot accordable, commandé électrostatiquement, comportant :

- un premier miroir, auquel est associé une électrode flottante,
- un second miroir, auquel sont associées une première et une seconde électrodes de commande, l'un des premier et second miroirs étant fixe tandis que l'autre est mobile,
- une cavité résonnante, de longueur d, délimitée par les premier et second miroirs, l'application d'une tension électrique entre les deux électrodes de commande entraînant un déplacement du miroir mobile par rapport au miroir fixe et modifiant donc la longueur d de la cavité résonante.

Dans la mesure où l'électrode associée à l'un des miroirs est une électrode flottante, aucune prise de contact n'est à réaliser du côté de ce miroir. Il n'y a donc plus, dans le système final, qu'un seul niveau de contact à prendre, correspondant aux électrodes de commande.

Par conséquent, l'interféromètre selon l'invention est toujours à commande électrostatique, mais les deux électrodes de commande sont ramenées sur un seul côté du dispositif.

L'électrode flottante et le miroir auquel elle est associée peuvent être réalisés en surface d'un premier substrat. Par exemple, ce substrat est en silicium et l'électrode flottante est réalisée en silicium dopé.

L'autre miroir, et ses électrodes de commande peuvent être réalisés en surface d'un second substrat, par exemple, lui aussi, en silicium.

Selon un mode particulier de réalisation, le miroir mobile peut être constitué d'une membrane gravée dans un substrat.

Quant aux électrodes de commande, elles peuvent être formées de part et d'autre d'une zone réfléchissante à laquelle elles sont associées, par exemple le miroir mobile. En d'autres termes, ce miroir comporte une zone centrale réfléchissante et des zones latérales sur lesquelles sont déposées les électrodes de commande.

Cette zone centrale réfléchissante peut avoir une forme circulaire. Dans le cas où il s'agit du miroir mobile, cette forme circulaire, délimitée par les électrodes de commande, permet un déplacement parfaitement plan de la zone réfléchissante mobile, puisque l'attraction électrostatique n'a lieu qu'à la périphérie de cette zone, ce qui permet d'avoir une sortie de filtre diaphragmée.

Les électrodes de commande peuvent être réalisées en un dépôt métallique. Par ailleurs, des contacts électriques peuvent être pris directement sur les électrodes de commande, en surface d'un des substrats.

L'invention a également pour objet un procédé de réalisation d'un interféromètre Fabry-Pérot accordable, comportant :

- une étape de réalisation d'un premier ensemble comportant un premier miroir et une électrode flottante associée à ce premier miroir,

- une étape de réalisation d'un second ensemble comportant un second miroir, présentant une zone réfléchissante, et une première et une seconde électrodes de commande associées à ce second miroir, l'un des miroirs étant fixe, tandis que l'autre est mobile,

- une étape de réalisation d'une cavité résonante, de longueur d, délimitée par les premier et second miroir, par assemblage des premier et second ensembles, l'application d'une tension électrique entre les électrodes de commande entraînant un déplacement de la zone réfléchissante du miroir mobile par rapport au miroir fixe et modifiant donc la longueur d de la cavité.

En particulier, l'électrode flottante et le miroir correspondant peuvent être réalisés en surface d'un premier substrat. Par exemple, le substrat peut être en silicium et l'électrode flottante peut être réalisée par dopage d'une couche mince de silicium en surface du premier miroir formé d'au moins une couche diélectrique, premier miroir déposé lui-même sur le substrat. L'électrode flottante peut être aussi réalisée par un dépôt métallique disposé sur le miroir.

L'autre miroir, ainsi que les première et seconde électrodes de commande peuvent être réalisées en surface d'un second substrat. Par exemple, ce second miroir est constitué d'une membrane dont une partie (la zone réfléchissante mobile) est rendue mobile par gravure du second substrat.

Les électrodes de commande, quant à elles, peuvent être réalisées par dépôt métallique sur l'un des miroirs.

**Brève description des figures**

- la figure 1 représente schématiquement un interféromètre Fabry-Pérot accordable, selon l'invention,

- la figure 2 représente une vue de dessus des électrodes de commande et du miroir mobile dans un interféromètre selon l'invention,

- la figure 3 est une vue en coupe d'un mode de réalisation d'un interféromètre selon l'invention,

- la figure 4 est un schéma électrique équivalent des électrodes de commande d'un interféromètre selon l'invention,

- la figure 5 représente une simulation de la déflexion du membrane réfléchissante dans un interféromètre selon l'invention,

- les figures 6A-6M représentent des étapes pour réalisation d'un interféromètre selon l'invention.

**Exposé détaillé de modes de réalisation de l'invention**

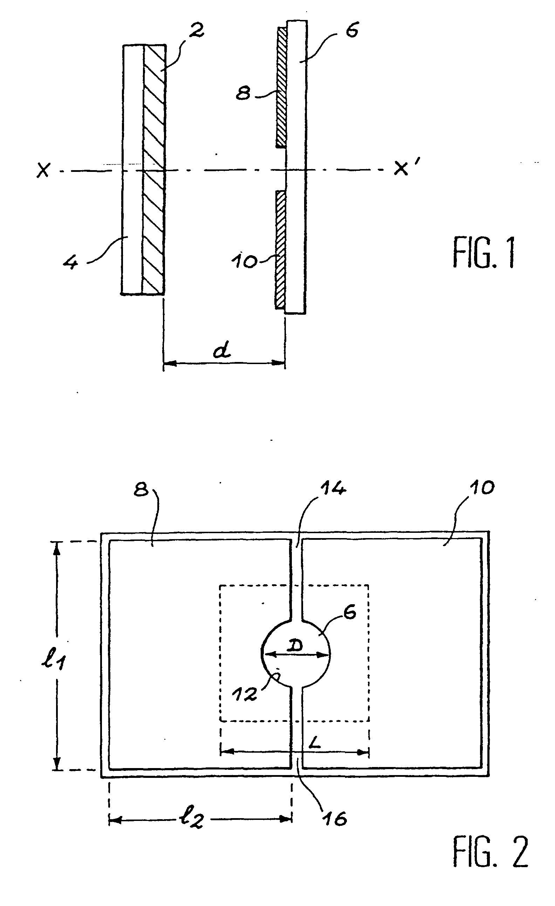

La figure 1 représente la structure d'un interféromètre Fabry-Pérot accordable commandé électrostatiquement, conforme à l'invention.

Cette structure comporte un premier miroir 4, fixe, auquel est associée une électrode flottante 2. Le miroir fixe 4 est formé par exemple sur un substrat. L'électrode flottante 2 est réalisée à la surface du miroir 4. Ce miroir 4 est constitué d'un empilement de couches de diélectriques différents (par exemple $SiO_2$ et Si non dopé ; ou bien au moins une couche de $SiO_2$ et une couche de Si non dopé, le Si non dopé étant un diélectrique). L'électrode flottante peut être la dernière couche de l'empilement formant le miroir, elle est alors constituée de silicium dopé, donc conducteur. Face au miroir fixe 2 se trouve un second miroir 6, mobile, selon un axe XX' de l'interféromètre. A ce second miroir sont associées deux électrodes de commande 8, 10. Celles-ci sont par exemple réalisées par métallisation d'une partie d'une membrane réflectrice formant le second miroir 6.

Les deux miroirs sont maintenus l'un par rapport à l'autre à une distance d. Cette distance est en fait la longueur de la cavité résonante délimitée par les miroirs 4, 6.

Le maintien des deux miroirs à une distance d est réalisé à l'aide, par exemple, de traverses ou de butées, ou d'entretoises non représentées sur la figure 1.

L'application d'une tension électrique, à l'aide de moyens non représentés sur la figure 1, entre les deux électrodes de commande 8, 10 entraîne un déplacement du miroir mobile 6 par rapport au miroir fixe, le long de l'axe XX', et modifie donc la longueur de la cavité résonante.

La longueur d de la cavité Fabry-Pérot satisfait à la relation :

$$2nd = m\lambda \qquad (1),$$

où d est la longueur qui sépare les surfaces réfléchissantes, m est un nombre entier, n est l'indice de réfraction du milieu situé entre les deux miroirs et $\lambda$ est la longueur d'onde. Toute variation de d entraîne donc une variation de la longueur d'onde centrale de la bande passante de l'interféromètre.

La cavité ainsi formée définit, du point de vue électrique, une capacité $C_1$ entre les électrodes de commande 8, 10 et l'électrode flottante 2. En fait, l'application d'une tension électrique entre les électrodes de commande, modifie, à travers la capacité $C_1$ de l'entrefer, le potentiel de l'électrode flottante 2, et, ainsi, le miroir mobile 6 est attiré en direction du miroir fixe.

Le fonctionnement exposé ci-dessus n'est pas modifié si l'électrode flottante est associée au miroir mobile et les électrodes de commande au miroir fixe. On décrit ci-dessous, de manière détaillée, le cas où l'électrode flottante est associée au miroir fixe, mais l'enseignement de l'invention concerne les deux cas et le second cas peut être facilement réalisé à partir du premier en inversant les électrodes de commande et l'électrode de référence.

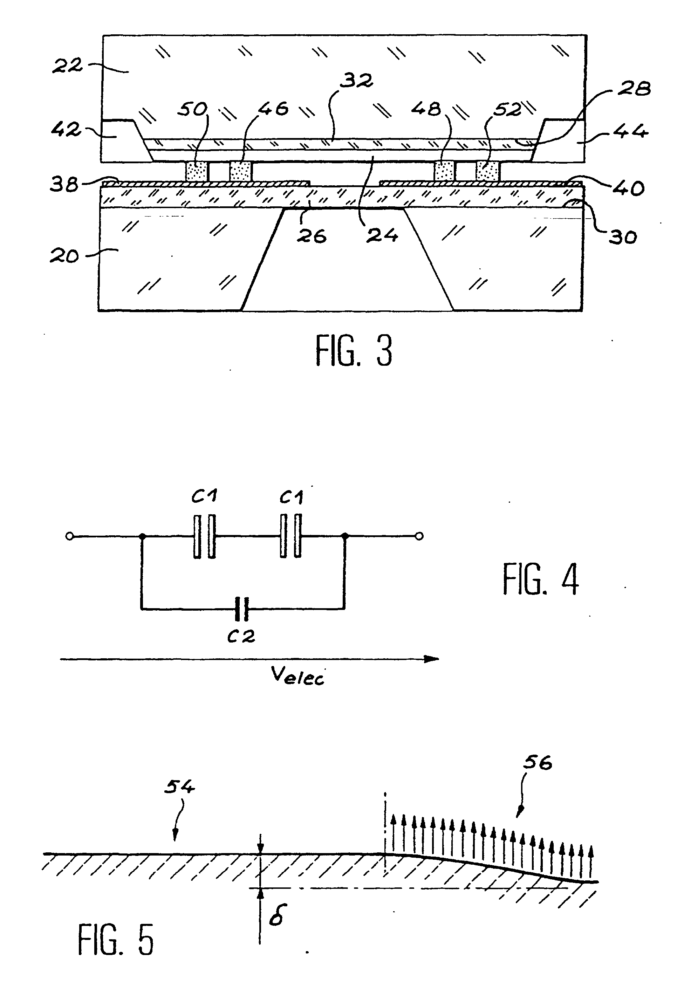

Une vue de dessus des électrodes de commande 8, 10 et du miroir mobile est donnée en figure 2 : selon ce mode de réalisation, les électrodes de commande 8, 10 sont réalisées par dépôt métallique sur une surface, ou membrane, réfléchissante. Le dépôt métallique laisse une ouverture circulaire 12 sur la surface réfléchissante, laissant ainsi libre une zone centrale, réfléchissante et mobile. Le dépôt laisse libre deux tranchées 14, 16 permettant d'isoler les électrodes de commande 8, 10 l'une par rapport à l'autre. Pratiquement, les électrodes peuvent être réalisées par dépôt métallique puis par gravure des zones 12, 14, 16.

Un mode de réalisation d'un interféromètre selon l'invention est illustré en figure 3. Cet interféromètre est réalisé dans deux substrats 20, 22, par exemple en silicium de type SOI ("Silicon On Insulator"). Des miroirs 32, 26 sont réalisés par dépôt de couches minces : ce sont par exemple des dépôts constitués d'un empilement de diélectriques différents, par exemple de $SiO_2$ et de Si (le Si non dopé est un diélectrique), d'épaisseur $\lambda/4$, alternés et réalisés sur chacune des faces 28, 30 des deux substrats destinées à être en regard l'une de l'autre. L'épaisseur et le nombre des couches de chaque empilement à déposer dépend de la longueur d'onde à laquelle le filtre, ou l'interféromètre, est destiné à résonner, ainsi que de la finesse d'émission voulue.

Sur le miroir 32, la couche externe 24 de l'empilement est formée de silicium dopé pour la rendre conductrice.

Les deux miroirs 32, 26 définissent une cavité Fabry-Pérot dont les longueurs d'onde de résonance sont définies par l'équation (1) ci-dessus, la distance d étant la distance séparant les surfaces des deux miroirs.

Le miroir fixe 32 est muni d'une électrode, dite flottante, 24. Le miroir 26 est muni de deux électrodes de commande 38, 40, ayant par exemple la forme décrite ci-dessus en liaison avec la figure 2. A ces électrodes de commande sont associés des contacts électriques. Deux cavités 42, 44 gravées dans le substrat 22 permettent éventuellement de laisser un passage pour ces contacts électriques.

L'électrode flottante peut être réalisée par exemple par un dopage fort du substrat 22.

Le maintien des deux substrats, l'un par rapport à l'autre, dans la position voulue de manière à définir une cavité Fabry-Pérot de longueur d, est assuré par des butées 46, 48 et par scellement à l'aide de joints, ou de plots en résine 50, 52. De préférence, on laisse dans les joints en résine des évents qui permettent de réaliser une égalisation des pressions à l'intérieur et à l'extérieur de la cavité Fabry-Pérot.

La figure 4 représente un schéma électrique équivalent à la structure globale, ou $C_1$ désigne la capacité de commande réalisée entre l'électrode de commande et l'électrode flottante, et où $C_2$ désigne la capacité parasite, due par exemple, dans le mode de réalisation de la figure 2, aux tranchées 14, 16. Toujours en prenant l'exemple de la figure 2, avec un diamètre D=1 mm et une longueur L=1,37 mm (distance entre les deux plots 46, 48), des électrodes de taille $l_1$=2 mm et $l_2$=1,9 mm, des tranchées 14, 16 de largeur égale à environ 10 µm, des électrodes 8, 10 réalisées par un dépôt métallique d'épaisseur égal à environ 300 nm, on obtient, pour une distance d=1,8 µm :

$$C_1=33 \text{ pF et } C_2=0,26 \text{ fF.}$$

Une simulation de la déflexion d'un miroir mobile, ayant la forme d'une membrane constituée d'un empilement de couches $Si_3N_4$ (épaisseur : 2 µm) /$SiO_2$ (épaisseur : 0,7 µm) / Si (épaisseur : 0,3 µm) / $SiO_2$ (épaisseur : 0,7 µm) / Si (épaisseur : 0,3 µm), sous une tension de 30 volts a permis de vérifier que la déflexion est plane sur toute la partie centrale active de la membrane. Dans cet exemple, la tension est appliquée entre deux électrodes parallèles. Cette simulation a été réalisée grâce à la méthode des éléments finis (ANSYS). La figure 5 illustre le résultat : elle ne représente qu'une moitié de la membrane (zone centrale mobile 54 et zone périphérique métallisée 56), les flèches représentant la zone où la force électrostatique est appliquée. La déflexion $\delta$ obtenue est de 0,32 µm.

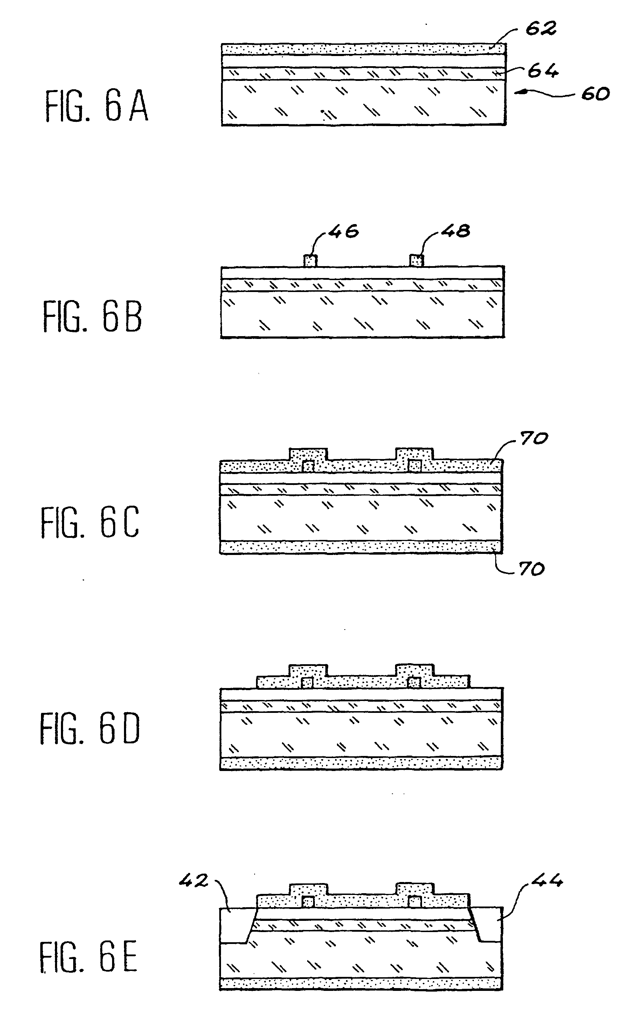

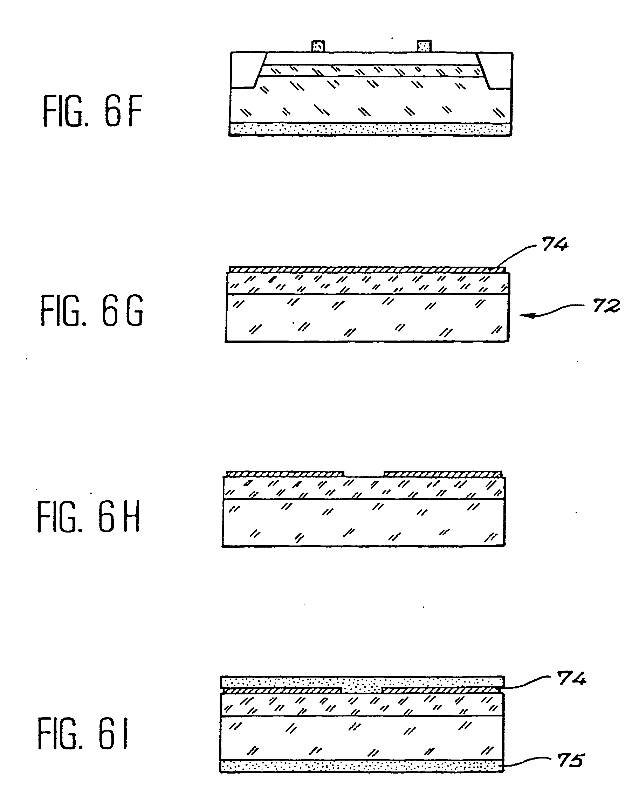

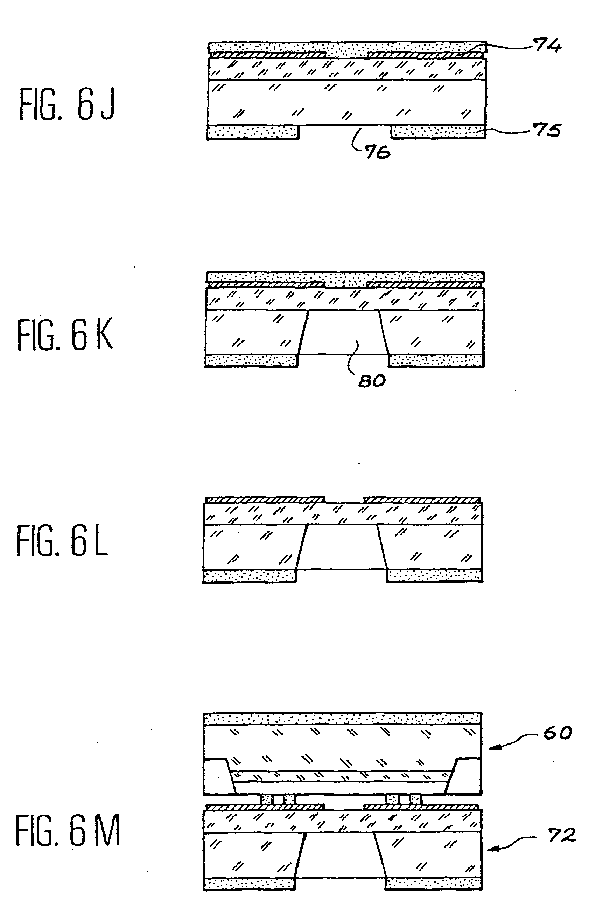

Les figures 6A à 6M représentent des étapes de réalisation d'un dispositif selon l'invention.

Les figures 6A à 6F représentent les étapes de réalisation d'une première partie de l'interféromètre.

Tout d'abord, on considère un substrat 60, par exemple de type SOI, avec un dépôt 62 de $SiO_2$ en face avant. La référence 64 désigne également une couche $SiO_2$. Entre les deux se trouve une couche 63 de Si.

On réalise ensuite une étape de photolithographie : on étale une résine positive sur le substrat (résine de type "schipley 1828"), que l'on sèche. Une étape d'insolation permet de définir la forme des butées de séparation (figure 6B : butées 46, 48 de la figure 3). On réalise ensuite le développement, c'est-à-dire le retrait de la résine insolée, puis un recuit. La gravure des butées peut être réalisée au $CHF_3/O_2$ et le retrait de la résine avec de l'acide nitrique fumant.

On réalise ensuite sur les butées obtenues (figure 6C) un dépôt 70 de $Si_3N_4$ (d'épaisseur 1 µm) double face.

L'étape suivante (figure 6D) est une étape de gravure face avant du $Si_3N_4$ par photolithographie de résine positive (pour définir les cavités 42, 44), de gravure au $CHF_3/O_2$ et de retrait de la résine au $HNO_3$ fumant.

Ensuite (figure 6E) on réalise la gravure des cavités 42, 44 au $CHF_3/O_2$, puis au KOH à 20% et 85°C, pendant environ 2 heures.

Enfin (figure 6F), on retire le $Si_3N_4$ en face avant par gravure du $CHF_3/O_2$.

Les figures 6G à 6L représentent des étapes de réalisation d'une deuxième partie d'un interféromètre.

On considère, là aussi, un substrat de départ 72 de type SOI, sur lequel on réalise un dépôt 74 de chrome (10 nm d'épaisseur) et d'or (300 nm d'épaisseur) en face avant.

Puis, (figure 6H), on réalise la gravure des électrodes de commande par :

- photolithographie par résine positive,
- gravure de la couche d'or (à l'aide d'un mélange de 80 g de $NH_4I$, 20 g de $I_2$ dans 400 ml de $H_2O$ et 600 ml d'éthanol),
- gravure de la couche de chrome (par mélange de 25 g de $Ce(SO_4)_2$, $2NH_2SO_4$, $2H_2O$ dans 625 ml de $H_2O$ et 125 ml de $HNO_3$),
- retrait de la résine au $HNO_3$ fumant.

Ensuite, (figure 6I), on réalise un dépôt 74 de $Si_3N_4$ d'épaisseur 1 μm, en double face.

Une ouverture 76 est réalisée dans la couche arrière de résine (figure 6J), par photolithographie par résine positive, gravure de la face arrière de $Si_3N_4$ au $CHF_3/O_2$ et retrait de la résine au $HNO_3$ fumant.

L'étape suivante (figure 6K) permet de graver la face arrière de la membrane réfléchissante au KOH à 20% (85°C pendant 5 heures). On réalise ainsi la cavité 80.

La couche avant 74 de $Si_3N_4$ est gravée au $CHF_3/O_2$ afin de libérer les électrodes de commande.

Puis, (figure 6M), les deux structures ainsi obtenues sont mises en contact et scellées par résine négative. On réalise une photolithographie de résine négative sur la face avant du substrat 60 et le scellement est effectué à 200°C.

Enfin, une étape de prise de contact sur les électrodes de commande est réalisée.

Dans le cas où l'électrode flottante est associée au miroir mobile, c'est le substrat sur lequel cette électrode est réalisée qui est gravé, et non pas le substrat sur lequel sont réalisées les électrodes de commande.

L'interféromètre selon l'invention est accordable et peut être intégré dans tout système d'analyse de gaz qui nécessite une sélection de longueur d'onde. Son caractère accordable rend possible une détection de plusieurs gaz, en fonction de la longueur d'onde de travail. Il est possible, également, de travailler en modulation de fréquence optique.

Enfin, l'interféromètre selon l'invention peut être utilisé pour les télécommunications, car le micro-usinage de silicium permet de réaliser de très petites cavités, et donc des résonances autour des longueurs d'onde à 1,3 μm et 1,55 μm.

## Revendications

1. Interféromètre Fabry-Pérot accordable, comportant :

 - un premier miroir (4, 24),
 - un second miroir (6, 26), l'un des premier et second miroirs étant fixe tandis que l'autre est mobile, et
 - une cavité résonnante, de longueur d, délimitée par les premier et second miroirs,

 **caractérisé en ce que** :

 - une électrode flottante (2, 32) est associée au premier miroir, et

 - une première et seconde électrode de commande (8, 10, 38, 40) sont associées au second miroir de sorte que l'application d'une tension électrique entre les première et seconde électrodes de commande entraînent un déplacement du miroir mobile par rapport au miroir fixe, modifiant ainsi la longueur d de la cavité.

2. Interféromètre selon la revendication 1, l'électrode flottante (2, 32) et le miroir (4, 24) auquel elle est associée, étant réalisés en surface d'un premier substrat (22, 60).

3. Interféromètre selon la revendication 2, le premier substrat (22, 60) étant en silicium et l'électrode flottante étant réalisée en silicium dopé.

4. Interféromètre selon l'une des revendications 1 à 3, les électrodes de commande (8, 10, 38, 40) et le miroir (6, 26) auquel elles sont associées, étant réalisés en surface d'un second substrat (20, 72).

5. Interféromètre selon l'une des revendications 1 à 4, le miroir (6, 26) mobile étant constitué d'une membrane gravée dans un substrat (20, 72).

6. Interféromètre selon l'une des revendications 4 ou 5, le substrat (20, 72) étant en silicium.

7. Interféromètre selon l'une des revendications 1 à 6, les électrodes de commande (8, 10, 38, 40) étant formées de part et d'autre d'une zone réfléchissante (6) du miroir auquel elles sont associées.

8. Interféromètre selon l'une des revendications 1 à 6, le miroir mobile, comportant une zone centrale (6) réfléchissante, mobile, et des zones latérales sur lesquelles sont formées les électrodes de commande (8, 10, 38, 40) ou l'électrode flottante.

9. Interféromètre selon l'une des revendications 1 à 8, les électrodes de commande étant réalisées en un dépôt métallique.

10. Interféromètre selon l'une des revendications 1 à 9, des contacts électriques étant pris directement sur les électrodes de commande.

11. Interféromètre selon l'une des revendications 7 ou 8, la zone réfléchissante (6), mobile, ayant une forme circulaire (12).

12. Procédé de réalisation d'un interféromètre Fabry-Pérot accordable comprenant une cavité résonante, de longueur d, délimitée par un premier (4, 24) et un second (6, 26) miroirs, l'un des premier et second miroirs étant fixe tandis que l'autre est mobile, **caractérisé en ce qu'**il comprend :

- une étape de réalisation d'un premier ensemble comportant le premier miroir (4, 24) et une électrode flottante (2, 32) associée à ce premier miroir,
- une étape de réalisation d'un second ensemble comportant le second miroir (6, 26), et une première et une seconde électrodes de commande (8, 10, 38, 40) associées à ce second miroir, et
- une étape de réalisation de la cavité résonante, par assemblage des premier et second ensembles, l'application d'une tension électrique entre les première et seconde électrodes de commande (8, 10, 38, 40) entraînant un déplacement d'une zone réfléchissante du miroir mobile par rapport au miroir fixe, modifiant ainsi la longueur d de la cavité.

13. Procédé selon la revendication 12, l'électrode flottante et le miroir auquel elle est associée étant réalisés en surface d'un premier substrat (22, 60).

14. Procédé selon la revendication 13, le substrat étant en silicium et l'électrode flottante étant réalisée par dopage du substrat.

15. Procédé selon l'une des revendications 12 à 14, comportant en outre une étape de réalisation, sur le premier miroir, de moyens (48, 46) pour maintenir, au repos, les miroirs fixe et mobile à la distance d.

16. Procédé selon la revendication 15, les moyens pour maintenir les miroirs fixe et mobile à la distance d étant des butées (48, 46).

17. Procédé selon l'une des revendications 15 ou 16, les moyens pour maintenir, au repos, les miroirs fixe et mobile à la distance d étant réalisés par gravure.

18. Procédé selon la revendication 13, comportant en outre une étape de réalisation de cavités latérales (42, 44), par gravure.

19. Procédé selon l'une des revendications précédentes, le second miroir ainsi que les première et seconde électrodes de commande (8, 10, 38, 40) étant réalisés en surface d'un second substrat (20, 72).

20. Procédé selon la revendication 19, le second miroir étant constitué d'une membrane, dont une partie est rendue mobile par gravure du second substrat.

21. Procédé selon l'une des revendications 12 à 20, les électrodes de commande étant réalisées par dépôt métallique sur le second miroir.

22. Procédé selon l'une des revendications 19 ou 20, comportant en outre une étape de réalisation de contacts métalliques des première et seconde électrodes de commande.

**Patentansprüche**

1. Abstimmbares Fabry-Perot-Interferometer, umfassend:

- einen ersten Spiegel (4, 24),
- einen zweiten Spiegel (6, 26), wobei einer der Spiegel, der erste oder der zweite, fest ist und der jeweils andere beweglich ist, und
- einen Resonator der Länge d, abgegrenzt durch den ersten und den zweiten Spiegel,

**dadurch gekennzeichnet,**

- **dass** eine Schwebelektrode (2, 32) mit dem ersten Spiegel verbunden ist, und
- **dass** eine erste und zweite Steuerelektrode (8, 10, 38, 40) mit dem zweiten Spiegel verbunden ist, so dass das Anlegen einer elektrischen Spannung zwischen der ersten und der zweiten Steuerelektrode eine Verschiebung des beweglichen Spiegels in Bezug auf den festen Spiegel bewirkt, was folglich die Länge l des Resonators modifiziert.

2. Interferometer nach Anspruch 1, bei dem die Schwebelektrode (2, 32) und der Spiegel (4, 24), dem sie zugeordnet ist, auf der Oberfläche eines ersten Substrats (22, 60) realisiert sind.

3. Interferometer nach Anspruch 2, bei dem das erste Substrat (22, 60) aus Silicium ist und die Schwebelektrode aus dotiertem Silicium ist.

**4.** Interferometer nach einem der Ansprüche 1 bis 3, bei dem die Steuerelektroden (8, 10, 38, 40) und der Spiegel (6, 26), mit dem sie verbunden sind, an der Oberfläche eines zweiten Substrats (20, 72) realisiert sind.

**5.** Interferometer nach Anspruch 1, dessen beweglicher Spiegel (6, 26) durch eine in ein Substrat (20, 72) geätzte Membran gebildet wird.

**6.** Interferometer nach einem der Ansprüche 4 oder 5, dessen Substrat (20, 72) aus Silicium ist.

**7.** Interferometer nach einem der Ansprüche 1 bis 6, dessen Steuerelektroden (8, 10, 38, 40) beiderseits einer reflektierenden Zone (6) des Spiegels ausgebildet sind, mit der sie verbunden sind.

**8.** Interferometer nach einem der Ansprüche 1 bis 6, das eine bewegliche reflektierende zentrale Zone (6) und laterale Zonen umfasst, in denen die Steuerelektroden (8, 10, 38, 40) oder die Schwebelektrode ausgebildet sind.

**9.** Interferometer nach einem der Ansprüche 1 bis 8, dessen Steuerelektroden durch eine metallische Abscheidung gebildet werden.

**10.** Interferometer nach einem der Ansprüche 1 bis 9, bei dem elektrische Kontakte direkt an den Steuerelektroden erfolgen.

**11.** Interferometer nach einem der Ansprüche 7 oder 8, dessen bewegliche reflektierende Zone (6) eine Kreisform (12) aufweist.

**12.** Verfahren zur Herstellung eines abstimmbaren Fabry-Perot-Interferometers mit einem Resonator der Länge d, abgegrenzt durch einen ersten (4, 24) und einen zweiten (6, 26) Spiegel, wobei einer der Spiegel, der erste oder der zweite, fest ist und der jeweils andere beweglich ist,
**dadurch gekennzeichnet, dass** es umfasst:

- einen Schritt zur Herstellung einer ersten Einheit, den ersten Spiegel (4, 24) und eine mit diesem ersten Spiegel verbundene Schwebelektrode (2, 32) umfassend,
- einen Schritt zur Herstellung einer zweiten Einheit, den zweiten Spiegel (6, 26) und eine mit diesem zweiten Spiegel verbundene erste und zweite Steuerelektrode (8, 10, 38, 40) umfassend,
- einen Schritt zur Herstellung des Resonators durch Zusammenbau der ersten und der zweiten Einheit, wobei das Anlegen einer elektrischen Spannung zwischen der ersten und der zweiten Steuerelektrode (8, 10, 38, 40) eine Verschiebung des beweglichen Spiegels in Bezug auf den festen Spiegel bewirkt, was folglich die Länge I des Resonators modifiziert.

**13.** Verfahren nach Anspruch 12, wobei die Schwebelektrode und der Spiegel, dem sie zugeordnet ist, auf der Oberfläche eines ersten Substrats (22, 60) realisiert sind.

**14.** Verfahren nach Anspruch 13, wobei das erste Substrat aus Silicium ist und die Schwebelektrode durch Dotierung des Substrats realisiert wird.

**15.** Verfahren nach einem der Ansprüche 12 bis 14 mit außerdem einem Schritt zur Herstellung - auf dem ersten Spiegel - von Einrichtungen (48, 46), um den festen und den beweglichen Spiegel im Ruhezustand auf dem Abstand d zu halten.

**16.** Verfahren nach Anspruch 15, wobei die Einrichtungen, die dazu dienen, den festen und den beweglichen Spiegel auf dem Abstand d zu halten, Anschläge (48, 46) sind.

**17.** Verfahren nach einem der Ansprüche 15 oder 16, wobei die Einrichtungen, um den festen und den beweglichen Spiegel im Ruhezustand auf dem Abstand d zu halten, durch Ätzen realisiert werden.

**18.** Verfahren nach Anspruch 13 mit außerdem einem Schritt zur Realisierung lateraler Resonatoren (42, 44) durch Ätzen.

**19.** Verfahren nach einem der vorangehenden Ansprüche, wobei der zweite Spiegel sowie die erste und die zweite Steuerelektrode (8, 10, 38, 40) auf der Oberfläche eines zweiten Substrats (20, 72) realisiert werden.

**20.** Verfahren nach Anspruch 19, wobei der zweite Spiegel durch eine Membran gebildet wird, von der ein Teil durch Ätzen des zweiten Substrats beweglich gemacht wird.

**21.** Verfahren nach einem der Ansprüche 12 bis 20, wobei die Steuerelektroden durch Metallabscheidung auf dem zweiten Spiegel realisiert werden.

**22.** Verfahren nach einem der Ansprüche 12 bis 20, das außerdem einen Schritt zur Herstellung metallischer Kontakte der ersten und der zweiten Steuerelektrode umfasst.

**Claims**

**1.** Tunable Fabry-Pérot interferometer comprising:

- a first mirror (4, 24),
- a second mirror (6, 26), one of the first and second mirrors being fixed while the other is movable,
- a resonant cavity of length d, defined by the first and second mirrors,

**characterized in that**:

- a floating electrode (2, 32) is fixed to the first mirror and
- a first and second control electrodes (8, 10, 38, 40) are fixed to the second mirror in such a way that the application of a voltage between the first and second control electrodes gives rise to a displacement of the movable mirror relative to the fixed mirror, thus modifying the length d of the cavity.

2. Interferometer according to claim 1, wherein the floating electrode (2, 32) and the mirror (4, 24) to which it is fitted are constructed on the surface of a first substrate (22, 60).

3. Interferometer according to claim 2, wherein the first substrate (22, 60) is made of silicon and the floating electrode is made of doped silicon.

4. Interferometer according to claim 1, wherein the control electrodes (8, 10, 38, 40) and the mirror (6, 26) to which they are fitted are constructed on the surface of a second substrate (20, 72).

5. Interferometer according to one of the claims 1 to 4, wherein the movable mirror (6, 26) consists of a membrane etched into a substrate (20, 72).

6. Interferometer according to claim 4 or 5, wherein the substrate (20, 72) is made of silicon.

7. Interferometer according to one of the claims 1 to 6, wherein the control electrodes (8, 10, 38, 40) are formed on either side of a reflecting zone (6) of the mirror to which they are fitted.

8. Interferometer according to one of the claims 1 to 6, wherein the movable mirror comprises a movable central reflecting zone (6) and lateral zones on which the control electrodes (8, 10, 38, 40) or the floating electrode are mounted.

9. Interferometer according to one of the claims 1 to 8, wherein the control electrodes consist of a metallic deposit.

10. Interferometer according to one of the claims 1 to 9, wherein the electric contacts are made directly with the control electrodes.

11. Interferometer according to claim 7 or 8, wherein the movable reflecting zone (6) is circular in shape (12).

12. Procedure for constructing a tunable Fabry-Pérot interferometer comprising a resonant cavity, the length d, defined by a first (4, 24) and a second (6, 26) mirrors, one of the first and second mirrors being fixed whilst the other is movable, **characterized in that** it comprises:

- a stage of producing a first assembly comprising the first mirror (4, 24) and a floating electrode (2, 32) fixed to said first mirror,
- a stage of producing a second assembly comprising the second mirror (6, 26) and a first and a second control electrodes (8, 10, 38, 40) fixed to said second mirror and
- a stage of producing the resonant cavity by the assembly of the first and second assemblies, the application of a voltage between the first and second control electrodes (8, 10, 38, 40) leading to a displacement of a reflecting zone of the movable mirror relative to the fixed mirror, thus modifying the length d of the cavity.

13. Procedure according to claim 12, wherein the floating electrode and the mirror to which it is fitted are constructed on the surface of a first substrate (22, 60).

14. Procedure according to claim 13, wherein the substrate is made of silicon and the floating electrode is made by doping the substrate.

15. Procedure according to one of the claims 12 to 14, wherein the first mirror is also subjected to a stage in which means (48, 46) are applied to maintain the fixed and movable mirrors at rest at distance d.

16. Procedure according to claim 15, wherein the means for maintaining the fixed and movable mirrors at distance d are stops (48, 46).

17. Procedure according to claim 15 or 16, wherein the means for maintaining the fixed and movable mirrors at rest at distance d are produced by etching.

18. Procedure according to claim 13, also comprising a stage in which lateral cavities (42, 44) are created by etching.

19. Procedure according to any one of the preceding claims, wherein the second mirror and the first and second control electrodes (8, 10, 38, 40) are constructed on the surface of a second substrate (20, 72).

**EP 0 903 565 B1**

20. Procedure according to claim 19, wherein the second mirror consists of a membrane, part of which is made movable by etching the second substrate.

21. Procedure according to one of the claims 12 to 20, wherein the control electrodes are constructed by metallic deposition on the second mirror.

22. Procedure according to claim 19 or 20, comprising an additional stage of producing the metallic contacts of the first and second control electrodes.

FIG. 1

FIG. 2

FIG. 3

FIG. 4

$V_{elec}$

FIG. 5

FIG. 6 A

FIG. 6 B

FIG. 6 C

FIG. 6 D

FIG. 6 E

FIG. 6 F

FIG. 6 G

74

72

FIG. 6 H

FIG. 6 I

74

75

FIG. 6 J

FIG. 6 K

FIG. 6 L

FIG. 6 M